# EUROPÄISCHE PATENTSCHRIFT

(11) **EP 2 217 386 B1**
(45) Veröffentlichungstag und Bekanntmachung des Hinweises auf die Patenterteilung: **12.07.2017**
(21) Anmeldenummer: 08853547.1
(22) Anmeldetag: 26.11.2008
(51) Int. Cl.: B05C 13/02, B31B 70/62, B01J 4/02, B05C 5/02

(54) **GEGENLAGE DÜSENBELEIMUNG**
BACKING RUN FOR NOZZLE PASTE APPLICATION
ÉLÉMENT ANTAGONISTE POUR ENCOLLAGE PAR TUYÈRE

(30) Priorität: 30.11.2007 DE 102007057820
(43) Veröffentlichungstag der Anmeldung: 18.08.2010
(73) Patentinhaber: Windmöller & Hölscher KG, 49525 Lengerich (DE)
(72) Erfinder: DAHER, Marco, 49565 Bramsche (DE); LAMKEMEYER, Andreas, 49124 Georgsmarienhütte (DE); KNOKE, Thomas, 33619 Bielefeld (DE); DUWENDAG, Rüdiger, 49525 Lengerich (DE)
(86) Internationale Anmeldenummer: PCT/EP2008/066260
(87) Internationale Veröffentlichungsnummer: WO 2009/068572

(56) Entgegenhaltungen:
- EP-A- 1 539 374
- DE-A1- 10 303 285
- DE-A1- 19 535 649
- DE-A1- 19 639 260
- US-A- 3 448 666

## Beschreibung

Die Erfindung betrifft eine Bodenlegevorrichtung zur Herstellung von Säcken, ein Leimwerk zur Beleimung flacher Gegenstände sowie ein Sackherstellungsverfahren.

Bodenlegevorrichtungen sind bekannt. Insbesondere die Herstellung von Kreuzbodenventilsäcken ist seit langem bekannt, ist Gegenstand zahlreicher Druckschriften (z. B. DE 710 264 oder DE 746 334) und wird mit so genannten Bodenlegern oder Bodenlegevorrichtungen durchgeführt.
Auch die Beleimung von Bestandteilen der Säcke während der Produktion ist seit langem druckschriftlich bekannt (z. B. DE 090 145 48 U1 und DE 30 200 43 A1).

Traditionelle Beleimungsstationen verwenden Walzen, die in der Regel ein Klischee tragen, um die Sackbestandteile zu beleimen. Bei Kreuzbodenlegern werden oft die gefalteten Böden der Säcke, den Böden zugeordnete Deckblätter und Ventilzettel beleimt.

In jüngerer Zeit sind Vorrichtungen bekannt geworden, die Sackbestandteile mit Düsen beleimen. Diese Düsen sind an einem Düsenkopf oder einer Düsenleiste angebracht beziehungsweise in Form von Bohrungen in diese Körper eingebracht. Die DE 103 09 893 A1 zeigt eine solche Vorrichtung.

Vorrichtungen der genannten Art bieten eine Reihe von Vorteilen. So wird die Vielzahl unterschiedlicher Klischees, die zur Produktion unterschiedlicher Sackformate bereitgehalten werden muss, überflüssig gemacht.

Allerdings besteht bei der Gewährleistung eines gleichmäßigen und kontinuierlichen Leimauftrages auf die Sackbestandteile weiterhin Verbesserungsbedarf.

Eine Gegenlage, welche die Sackbestandteile mit einer Kraft an die Düsenleiste anstellt, führt dazu, dass die bei der Sackproduktion üblichen Stärkeleime in gleichmäßiger Form von den Sackbestandteilen mitgenommen oder abgezogen werden, wenn das betreffende Sackbestandteil sich mit einer Relativgeschwindigkeit an der Düsenleiste vorbeibewegt.
Dies gilt insbesondere beim Auftragen von Kaltleim.
Eine Gegenlage wird von den Druckschriften US 3 448 666 A, DE 103 03 285 A1, DE 196 39 260 A1 und DE 195 35 649 A1 gezeigt.

Diese genannte Bewegung (mit der oben genannten Relativgeschwindigkeit) wird in der Regel eine Bewegung der Sackbestandteile an einer ortsfesten Düsenleiste vorbei sein, wie auch in der vorgenannten DE 103 09 893 A1 angedeutet ist. Die betreffende Düsenleiste kann eine beliebige Anzahl von Düsen aufweisen oder diese tragen. Interessant sind hier insbesondere mehr als zwei Düsen. Vorteilhaft sind jedoch auch Ausführungsformen mit mehr als fünf Düsen. Im Zusammenhang mit der Beleimung von Kreuzböden werden vorteilhafterweise mehr als zehn Düsen zum Einsatz kommen. In Bodenlegevorrichtungen können mit solchen Leimwerken neuer Bauart gefaltete Böden von Säcken und/oder Bodendeckblättern und/oder Ventilzettel beleimt werden.

Zu erwähnen bleibt noch, dass der Fachmann in der Regel zwischen Beuteln und Säcken unterschiedet. In der vorliegenden Anspruchsfassung soll der Begriff Säcke jedoch Beutel und/oder Säcke bedeuten.

Die DE 102 08 790 C1 offenbart eine Vorrichtung zum Auftragen fließfähiger Stoffe, wobei zur Vermeidung von Verklemmungen des Produkts in der Auftragsvorrichtung. Dabei sind segmentierte Auflageflächen vorgesehen, bei denen Aussparungen vorgesehen sind, in die das Produkt zurückweisen kann, wenn der Druck, der durch die Auftragsdüsen ausgeübt wird, zu groß ist. Die Offenbarung der DE 102 08 790 zeigt darüber hinaus,
dass die Gegenlage eine Wirkfläche aufweist,
dass mit dieser Wirkfläche zumindest ein Teil der Rückseite der zu beleimenden Fläche eines Sackbestandteiles mit Kraft beaufschlagbar ist, während das Sackbestandteil die Beleimungsstation durchläuft,
dass die Wirkfläche segmentiert ausgestaltet wird,
und dass die Wirkfläche Bänder enthält und/oder durch Bänder definiert wird,

Es hat sich gezeigt, dass auch die Vorrichtungen, die mit einer Gegenlage ausgestattet sind, oft einen ungleichmäßigen Leimauftrag bewirken und es kommen Schäden an den Sackbestandteilen zustande.

Daher besteht die Aufgabe der vorliegenden Erfindung darin, diesen Nachteilen abzuhelfen.

Die Aufgabe wird durch die Ansprüche 1, 9 und 10 gelöst.
Kern der Erfindung ist also,
dass
zwei voneinander beabstandete Schenkel (15) vorgesehen sind, wobei jedes Band an beiden Schenkeln angelenkt ist, oder die Bänder (14) von Führungswalzen (16) führbar und in die Bewegungsrichtung (z) der Sackbestandteile (2) bewegbar sind.

Mit einer solchen Wirkfläche kann die zur Anstellung der Sackbestandteile notwendige Kraft gleichmäßig und gegebenenfalls großflächig an die Sackbestandteile weitergegeben werden. Die Übertragung auf die Rückseite der zu beleimenden Fläche hat weitere Vorteile.

Die Verwendung von Bändern, deren den Sackbestandteilen zugewandten Oberflächenbestandteile die Wirkfläche bilden, ist erfindungsgemäß vorgesehen. Dies ist unter anderem der Elastizität der Bänder geschuldet. Dass die sich aus mehreren aufgespannten Bändern zusammengesetzte Wirkfläche segmentiert ist, ergibt sich bei der Verwendung mehrerer Bänder von selbst. Die Bänder werden in der Regel parallel zueinander aufgespannt werden. Als vorteilhaft hat es sich erwiesen, wenn die Bänder entlang der Richtung der Relativbewegung der Sackbestandteile in der Beleimungsstation ausgerichtet sind. Zumeist verläuft die Düsenleiste quer zu der Bewegungsrichtung der Sackbestandteile. In diesem Fall ergeben sich annähernd punktuelle Bereiche, in denen das durch die Kraftwirkung der Düsenleiste in Richtung auf die Wirkfläche ausgelenkte Band mit einer Kraft auf die Rückseite der Sackbestandteile drückt.

Besonders vorteilhaft ist dies, wenn die zu beleimenden Flächen unterschiedliche Dicken haben. Dies kann sich durch unterschiedliche Anzahlen von Papier- oder Folienlagen ergeben. Segmentiert heißt in diesem Zusammenhang, dass die Wirkfläche in Teilflächen zerlegt ist. Die Teilflächen können unabhängig voneinander Kraft auf die Rückseite der Sackbestandteile übertragen. Diese Teilflächen können daher auch unabhängig voneinander beweglich sein.

Wie bereits oben erwähnt, werden die Sackbestandteile durch eine Gegenlage mit einer Kraft an die Düsen angestellt. Dabei ist es vorteilhaft, wenn die Gegenlage zumindest teilweise aus flexiblem Material besteht. Die Flexibilität des Gegenlagenmaterials gewährleistet, dass die zu beleimende Oberfläche der Sackbestandteile, welche aus mehreren Materiallagen unterschiedlicher Größe und Überlappung bestehen, an die Düsenleiste angedrückt wird. Zusätzlich zu oder anstatt der Flexibilität, die zumindest gewährleistet, dass die Sackbestandteile nicht durch eine zu starre Gegenlage zerdrückt werden, können auch federnde Elemente in die Gegenlage eingebracht werden. Die federnden Elemente bringen zusätzlich zu der Weichheit der flexiblen Teile ein Mehr an Rückstellkraft auf. Elastische Materialien können Elastomere sein. Als Beispiel für federnde Materialien werden Federbleche genannt.

Es kommt die Verwendung verschiedener elastischer Bänder an dieser Stelle in Frage. Die Bänder sind beweglich an der Gegenlagevorrichtung angelenkt. Von Vorteil ist auch hier eine Beweglichkeit mit derselben Ausrichtung und gegebenenfalls demselben Vorzeichen wie die Relativbewegung zwischen Sackbestandteilen und Düsenleiste. Beweglichkeit in dem vorgenannten Sinne heißt, dass die Bänder und die von ihnen definierte Wirkfläche relativ zum Maschinengestell beweglich sind. Erfindungsgemäß ist vorgesehen, dass eine solche Beweglichkeit durch das Führen solcher Bänder über Leitwalzen herbeiführbar ist. Endlose Bänder sind hierbei vorteilhaft. Es ist möglich, die beweglichen Bänder durch die Relativbewegung der Sackbestandteile relativ zur Beleimungsstation in Bewegung zu versetzen. Die Sackbestandteile werden in der Regel durch andere Transportmittel wie Transportriemen (könnten auch Greifer oder Ähnliches sein) durch die Maschine geführt und könnten so Antriebskräfte auf die in Rede stehenden Bänder der Gegenlage übertragen.

In diesem Falle wären die betreffenden Sackbestandteile jedoch gewissen Übertragungskräften (besonders nachteilig Scherkräfte) ausgesetzt.
Daher ist es vorteilhaft, die Bänder anzutreiben, wobei die Antriebsrichtung bevorzugt in Richtung und/oder Geschwindigkeit der Transportbewegung der Säcke in der Beleimungsstation anzugleichen ist.

Es ist vorteilhaft, die Gegenlagevorrichtung und/oder die Düsenleiste so am Maschinengestell anzulenken, dass sich der Einlaufwinkel der Sackbestandteile zur Düsenleiste ändern lässt. In der Regel wird man hierzu die Wirkfläche relativ zum Maschinengestell verschwenken, das heißt, diejenigen Bauteile, die die Wirkfläche tragen oder definieren, werden schwenkbar am Maschinengestell angelenkt. Zusammenfassend ist also zu sagen, dass unter Schwenkbarkeit eine Beweglichkeit der Gegenlage zu verstehen ist, die den Einlaufwinkel der Sackbestandteile in den Spalt zwischen Gegenlage und Düsenlage ändert. In jedem Fall ist das Vorsehen einer solchen Schwenkbarkeit der Relativposition der Gegenlage zur Düsenleiste von Vorteil. Alternativ und ergänzend ist eine lineare relative Beweglichkeit von Gegenlage zu Düsenkopf von Vorteil. Dies kann durch eine Beweglichkeit des Düsenkopfes relativ zum Maschinengestell geschehen. Allerdings ist auch hier sowohl alternativ als auch ergänzend eine zusätzliche lineare Beweglichkeit der Gegenlage zur Düsenleiste von Vorteil.

So kann der Anpressdruck der Sackbestandteile durch diese Beweglichkeit eingestellt werden und es ist möglich, unter anderem auf unterschiedliche Dicken der Sackbestandteile einzugehen.

Eine weitere vorteilhafte Ausführungsform der Erfindung hat Haltemittel, die den Sackbestandteilen eine Haltekraft vermitteln. Diese Haltekraft wird vorteilhafterweise auf die Seite der Sackbestandteile übertragen, auf die der Leim in der entsprechenden Beleimungsstation aufgetragen wird. So kann eine Klemmung herbeigeführt werden, wenn die Kraft der Gegenlage, die in Richtung der Düsenleiste wirkt und die Kraft der Haltemittel einander entgegenwirken. Es ist vorteilhaft, wenn die Haltekraft auf diskrete abgeschlossene Flächenbereiche der Sackbestandteile wirkt. Diese können in der Raumrichtung (x) quer zur Relativbewegung der Sackbestandteile voneinander beabstandet sein. In letzterem Fall ist eine Einstellbarkeit dieses Abstandes von Vorteil. Die Haltemittel können als Greifer, Stempel, aber auch als Führungsbänder ausgestaltet sein.

Weitere Ausführungsbeispiele der Erfindung gehen aus der gegenständlichen Beschreibung und den Ansprüchen hervor.

Die einzelnen Figuren zeigen:
- Fig. 1: Eine Skizze eines Ausführungsbeispiels eines erfindungsgemäßen Leimwerkes
- Fig. 2: Eine Aufsicht auf die Wirkfläche der Gegenlage des in Figur 1 gezeigten Leimwerkes
- Fig. 3: Eine Aufsicht auf eine Wirkfläche der Gegenlage eines weiteren in Figur 4 gezeigten Leimwerkes
- Fig. 4: Eine Skizze eines dritten Ausführungsbeispiels eines erfindungsgemäßen Leimwerkes
- Fig. 5: Den Boden eines Kreuzbodenventilsackes
- Fig. 6: Eine Aufsicht auf die Gegenlage eines weiteren Leimwerkes

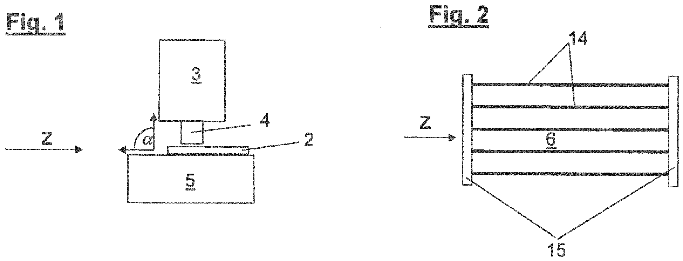

In Figur 1 ist ein Ausführungsbeispiel einer erfindungsgemäßen Beleimungsstation gezeigt, die einen Auftragskopf 3 mit einer Düsenleiste 4 aufweist, mit der die Sackbestandteile 2 beleimt werden. Der Winkel α ist der Winkel, in dem die Sackbestandteile in den von der Düsenleiste 4 und der Gegenlage 5 gebildeten Beleimungsspalt 12 einlaufen. Die Gegenlage 5 ist in Figur 1 stilisiert dargestellt und kann in der in den Figuren 2, 3, 4 und 6 dargestellten Form verwirklicht sein.

In Figur 2 sind die Bänder 14 diejenigen Elemente, die die Wirkfläche 6 der Gegenlage 5 definieren. Diejenigen Oberflächenbestandteile der Bänder 14, die in Kontakt mit den Sackbestandteilen 2 kommen, wenn dieser über die Bänder 14 geführt werden, bilden in diesem Fall die Wirkfläche 6. Die Bänder können Gitarrensaiten sein, die wie in Figur 2 weitgehend parallel zueinander ausgerichtet sind und unter einer bestimmten (geringen) mechanischen Spannung stehen. Die Gitarrensaiten oder Bänder 14 sind an den Schenkeln 15 angelenkt. Es ist auch bei dieser Ausführungsform vorteilhaft, die Bänder entlang der Laufrichtung der Sackbestandteile auszurichten.
Die von den Bändern 14 gebildete Wirkfläche 6 ist bereits deshalb segmentiert, weil die Bänder voneinander beabstandet sind.

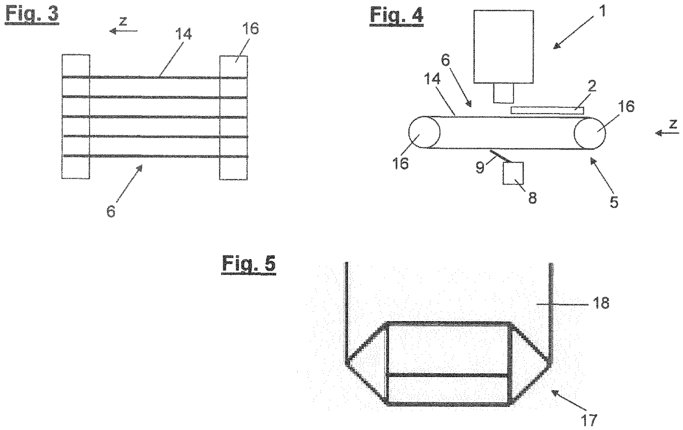

Figur 4 zeigt eine weitere Beleimungsstation mit einer anderen Gegenlage 5, die wieder Bänder 14 aufweist, deren die Sackbestandteile 2 berührende Oberflächenbestandteile die Wirkfläche 6 bilden. Im Unterschied zu dem in Figur 2 gezeigten Ausführungsbeispiel werden die Bänder von den Führungswalzen 16 geführt und in die Bewegungsrichtung z der Sackbestandteile 2 bewegt. Die solcherart geführten Bänder werden von der Rakelvorrichtung 8 mit dem Rakelmesser 9 abgerakelt.

Die Figur 3 zeigt die von den Bändern 14, die auf den Leitwalzen 16 laufen, gebildete Wirkfläche 5 aus der Sicht des Auftragskopfes 3.

Figur 5 zeigt den Boden 17 eines Kreuzbodenventilsackes 18. Durch die Abbildung soll verdeutlicht werden, dass die Falt- und Materialkanten eines solchen Sackbodens Höhenunterschiede aufweisen. Angesichts dieser Höhenunterschiede ist die Anwendung der gezeigten Gegenlagen 5 hier besonders vorteilhaft.

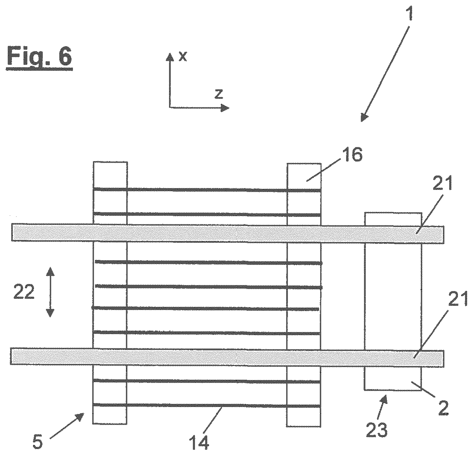

In Figur 6 ist eine weitere Möglichkeit angedeutet, die Sackbestandteile 2 in einem Leimwerk 1 zu führen. Zunächst ist eine Gegenlage 5, die der Gegenlage 5 aus den Figuren 3 und 4 weitgehend entspricht, aus Sicht des Auftragskopfes 3 dargestellt. Zusätzlich sind jedoch die Bänder 21 dargestellt, die aus Sicht des Düsenkopfes vor den Bändern 14 der Gegenlage befindlich sind. Beim Transport durch das Leimwerk 1 werden die Sackbestandteile 2 zwischen den Bändern 14 und 21 festgelegt. Beide Arten von Bändern sind in der Transportrichtung beweglich, so dass die Sackbestandteile zwischen den weitgehend synchron laufenden Bändern mitgeführt werden. Die Bänder 21 sind in ihrer Lage in der Richtung x quer zur Transportrichtung z der Sackbestandteile 1 verschieblich. Die Verschiebbarkeit wird mit fachüblichen Maßnahmen, wie einer verschieblichen Aufhängung der Walzen, die die Bänder führen, gewährleistet.
Es ist vorteilhaft, den Abstand der Bänder 21 zueinander einzustellen, dass die transportierten Sackbestandteile durch die Bänder in ihren Endbereichen in x-Richtung erfasst werden.

| **Bezugszeichenliste** | |
|---|---|
| 1 | Erstes Leimwerk |
| 2 | Sackbestandteile |
| 3 | Auftragskopf |
| 4 | Düsenleiste |
| 5 | Gegenlage |
| 6 | Wirkfläche der Gegenlage 5 |
| 7 | Rückseite der Sackbestandteile 2 |
| 8 | Rakelvorrichtung |
| 9 | Rakelmesser |
| 12 | Beleimungsspalt |
| 14 | Bänder der Gegenlage 5 |
| 15 | Schenkel, an denen die Bänder 14 angelenkt sind |
| 16 | Führungswalzen |
| 17 | Sackboden |
| 18 | Kreuzbodenventilsack |
| 20 | Zettel |
| 21 | Bänder |
| 22 | Pfeil |
| 23 | Endbereich in x-Richtung |
| z | Transportrichtung des Sackbestandteils 2 |
| x | Richtung quer zur Transportrichtung z |
| α | Einlaufwinkel |

## Patentansprüche

1. Bodenlegevorrichtung zur Herstellung von Säcken,
- vorzugsweise von Kreuzbodenventilsäcken (18),
- welche zumindest ein Leimwerk (1) enthält, das Bestandteile (2) der Säcke beleimt,
- wobei das Leimwerk (1) eine Düsenleiste (4) enthält, welche (4) zumindest eine Düse zur Extrusion von Leim auf die Sackbestandteile (2) aufweist,
- wobei das Leimwerk (1) eine Gegenlage (5) enthält, welche die Sackbestandteile (2) mit einer Kraft an die Düsenleiste (4) anstellt
- wobei die Gegenlage (5) eine Wirkfläche (6) aufweist,
- wobei mit dieser Wirkfläche (6) zumindest ein Teil der Rückseite der zu beleimenden Fläche eines Sackbestandteiles mit Kraft beaufschlagbar ist
- wobei die Wirkfläche (6) segmentiert ist,
- und wobei die Wirkfläche (6) Bänder (14) enthält und/oder durch Bänder (14) definiert wird
**dadurch gekennzeichnet, dass**
zwei voneinander beabstandete Schenkel (15) vorgesehen sind, wobei jedes Band an beiden Schenkeln angelenkt ist, oder die Bänder (14) von Führungswalzen (16) führbar und in die Bewegungsrichtung (z) der Sackbestandteile (2) bewegbar sind.

2. Bodenlegevorrichtung nach dem vorstehenden Anspruch,
**dadurch gekennzeichnet,**
**dass** die Gegenlage (5) flexible und/oder federnde Materialien enthält.

3. Bodenlegevorrichtung nach einem der vorstehenden Ansprüche,
**dadurch gekennzeichnet,**
**dass** die Bänder (14) aus einem der folgenden Materialien bestehen:
- ein flexibler Kunststoff, vorzugsweise ein Elastomer
- Drähte, vorzugsweise aus Metall wie Gitarrensaiten
- Polymerfasern

4. Bodenlegevorrichtung nach dem vorstehenden Anspruch,
**dadurch gekennzeichnet,**
**dass** die Bänder (14) der Wirkfläche (6) in derselben Richtung ausgerichtet sind, die die Relativbewegung zwischen der Düsenleiste (4) und den Sackbestandteilen (2) hat.

5. Bodenlegevorrichtung nach dem vorstehenden Anspruch,
**dadurch gekennzeichnet,**
**dass** die Bänder (14) der Wirkfläche (6) in dieselbe Richtung beweglich sind, in die die Relativbewegung zwischen den Sackbestandteilen (2) und der Düsenleiste (4) zeigt.

6. Bodenlegevorrichtung nach einem der vorstehenden Ansprüche,
**dadurch gekennzeichnet,**
**dass** die Bänder in einer Wirkverbindung mit einem Antrieb stehen, mit dem die Bänder bewegbar sind.

7. Bodenlegevorrichtung nach einem der vorstehenden Ansprüche,
**dadurch gekennzeichnet, dass**
zumindest Teile der Wirkfläche (6) relativ zur Düsenleiste (4) schwenkbar und/oder beweglich angebracht sind.

8. Bodenlegevorrichtung nach dem vorstehenden Anspruch,
**dadurch gekennzeichnet,**
**dass** Vorrichtungsbestandteile (15,16), die die Bänder (14) führen oder an denen die Bänder (14) befestigt sind, schwenkbar gelagert sind.

9. Leimwerk (1) zur Beleimung von Sackbestandteilen (2) welches eine Düsenleiste (4) enthält, welche zumindest eine Düse zur Extrusion von Leim auf die Sackbestandteile (2) aufweist,
und welches eine Gegenlage (5) enthält, welche (5) die Sackbestandteile (2) mit einer Kraft an die Düsenleiste (4) anstellt,
- wobei die Gegenlage (5) eine Wirkfläche (6) aufweist,
- wobei mit dieser Wirkfläche (6) zumindest ein Teil der Rückseite der zu beleimenden Fläche eines Sackbestandteiles mit Kraft beaufschlagbar ist
- wobei die Wirkfläche (6) segmentiert ist
und wobei die Wirkfläche (6) Bänder (14) enthält und/oder durch Bänder (14) definiert wird
**dadurch gekennzeichnet, dass**
zwei voneinander beabstandete Schenkel (15) vorgesehen sind, wobei jedes Band an beiden Schenkeln angelenkt ist, oder die Bänder (14) von Führungswalzen (16) führbar und in die Bewegungsrichtung (z) der Sackbestandteile (2) bewegbar sind..

10. Verfahren zur Herstellung von Säcken,
- vorzugsweise von Kreuzbodenventilsäcken (18),
- bei welchem die Bestandteile (2) der Säcke beleimt werden,
- und bei welchem die Säcke zur Beleimung an einer Düsenleiste (4) vorbeigeführt werden,
- welche (4) zumindest eine Düse zur Extrusion von Leim auf die Sackbestandteile aufweist, mit welcher Leim auf die Sackbestandteile (2) übertragen wird,
- wobei die Sackbestandteile (2) mit einer Gegenlage (5) mit einer Kraft an die Düsenleiste (4) angestellt werden,
- wobei die Kraft von verschiedenen Teilflächen einer Wirkfläche der Gegenlage auf die Rückseite der zu beleimenden Fläche eines Sackbestandteiles übertragen wird, wobei die Wirkfläche (6) Bänder (14) enthält und/oder durch Bänder (14) definiert wird,
**dadurch gekennzeichnet, dass**
zwei voneinander beabstandete Schenkel (15) vorgesehen sind, wobei jedes Band an beiden Schenkeln angelenkt wird, oder die Bänder (14) von Führungswalzen (16) geführt und in die Bewegungsrichtung (z) der Sackbestandteile (2) bewegt werden.

## Claims

1. A bottoming device for producing bags,
- preferably block bottom valve sacks (18),
- which contains at least one paste unit (1), which glues components (2) of the bags,
- wherein the paste unit (1) contains a nozzle strip (4), which (4) has at least one nozzle for extruding paste onto the bag components (2),
- wherein the paste unit (1) contains a backing run (5), which presses the bag components (2) with a force against the nozzle strip (4),
- wherein the backing run (5) has an active surface (6),
- wherein with this active surface (6) at least one part of the rear side of the surface of a bag component can be subjected to force,
- wherein the active surface (6) is segmented,
- and wherein the active surface (6) contains bands (14) and/or is defined by bands (14)
**characterized in that**
two legs (15) spaced apart from each other are provided, wherein each band is pivoted on both legs, or the strips (14) can be guided by guide roller (16) and can be moved in the direction of movement (z) of the bag components (2).

2. A bottoming device according to the preceding claim,
**characterized in**
**that** the backing run (5) contains flexible and/or resilient material.

3. A bottoming device according to any one of the preceding claims,
**characterized in**
**that** the bands (14) consist of the following material:
- a flexible plastic, preferably an elastomer
- wires, preferably made from metal such as guitar strings
- polymer fibers

4. A bottoming device according to the preceding claim,
**characterized in**
**that** the bands (14) of the active surface (6) are aligned in the same direction, which the relative movement has between the nozzle strip (4) and the bag components (2).

5. A bottoming device according to the preceding claim,
**characterized in**
**that** the bands (14) of the active surface (6) are movable in the same direction, in which the relative movement shows between the bag components (2) and the nozzle strip (4).

6. A bottoming device according to any one of the preceding claims,
**characterized in**
**that** the bands are in an operative connection with a drive, with which the bands are movable.

7. A bottoming device according to any one of the preceding claims,
**characterized in**
**that** at least parts of the active surface (6) are mounted pivotably and/or movably relative to the nozzle strip (4).

8. A bottoming device according to the preceding claim,
**characterized in**
**that** the device components (15, 16), which guide the bands (14) or to which the bands (14) are fastened, are pivotably mounted.

9. A paste unit (1) for gluing bag components (2)
which contains a nozzle strip (4), which has at least one nozzle for extruding paste onto the bag components (2),
and which contains a backing run (5), which (5) presses the bag components (2) with a force against the nozzle strip (4),
- wherein the backing run (5) has an active surface (6),
- wherein with this active surface (6) at least one part of the rear side of the surface of a bag component can be subjected to force,
- wherein the active surface (6) is segmented,
and wherein the active surface (6) contains bands (14) and/or is defined by bands (14)
**characterized in that**
two legs (15) spaced apart from each other are provided, wherein each band is pivoted on both legs, or the bands (14) can be guided by guide rollers (16) and can be moved in the direction of movement (z) of the bag components (2).

10. A method for producing bags,
- preferably block bottom valve sacks (18),
- in which components (2) of the bags are glued,
- and in which the bags are guided past a nozzle strip (4) for the gluing,
- which (4) has at least one nozzle for extruding paste onto the bag components, with which paste is transferred to the bag components (2),
- wherein the bag components (2) with a backing run (5) are pressed with a force against the nozzle strip (4),
- wherein the force is transferred from different sub-areas of the active surface of the backing run to the rear side of the surface of a bag component to be glued, wherein the active surface (6) contains bands (14) and/or is defined by bands (14),
**characterized in that**
two legs (15) spaced apart from each other are provided, wherein each band is pivoted on both legs, or the bands (14) are guided by guide rollers (16) and can be moved in the direction of movement (z) of the bag components (2).

## Revendications

1. Dispositif de pose de fonds pour la fabrication de sacs,
- de préférence de sacs à valves à fonds croisés (18),
- qui contient au moins un dispositif d'encollage (1) qui encolle des composants des sacs (2),
- le dispositif d'encollage (1) comprenant une barre de buses (4) qui comprend au moins une buse pour l'extrusion de colle sur les composants du sac (2),
- le dispositif d'encollage (1) comprenant un support (5) qui comprime les composants du sac (2) avec une force contre la barre de buses (4),
- le support (5) comprenant une surface active (6),
- cette surface active (6) permettant d'appliquer une force sur au moins le côté arrière de la surface à encoller d'un composant du sac,
- la surface active (6) étant segmentée,
- et la surface active (6) comprenant des bandes (14) et/ou étant définie par des bandes (14),
**caractérisé en ce que**
deux branches (15) écartées l'une de l'autre, étant prévues, chaque bande étant articulée au niveau des deux branches ou les bandes (14) pouvant être guidées par des rouleaux de guidage (16) et étant mobiles dans la direction de déplacement (z) des composants du sac (2).

2. Dispositif de pose de fonds selon la revendication précédente,
**caractérisé en ce que**
le support (5) comprend des matériaux flexibles et/ou élastiques.

3. Dispositif de pose de fonds selon l'une des revendications précédentes,
**caractérisé en ce que**
les bandes (14) sont constituée des matériaux suivants :
- une matière plastique flexible, de préférence un élastomère,
- des fils, de préférence en métal, comme des cordes de guitare,
- des fibres polymères.

4. Dispositif de pose de fonds selon la revendication précédente,
**caractérisé en ce que**
les bandes (14) de la surface active (6) sont orientées dans la même direction que le mouvement relatif entre la barre de buses (4) et les composants du sac (2).

5. Dispositif de pose de fonds selon la revendication précédente,
**caractérisé en ce que**
les bandes (14) de la surface active (6) sont mobiles dans la même direction que le mouvement relatif entre les composants du cas (2) et la barre de buses (4).

6. Dispositif de pose de fonds selon l'une des revendications précédentes,
**caractérisé en ce que**
les bandes sont reliées de manière fonctionnelle avec un dispositif d'entraînement qui permet de déplacer les bandes.

7. Dispositif de pose de fonds selon l'une des revendications précédentes,
**caractérisé en ce que**
au moins des parties de la surface active (6) sont montées de manière pivotante et/ou mobiles par rapport à la barre de buses (4).

8. Dispositif de pose de fonds selon la revendication précédente,
**caractérisé en ce que**
les composants du dispositif (15, 16) qui guident les bandes (14) ou auxquels les bandes (14) sont fixées, sont logés de manière pivotante.

9. Dispositif d'encollage (1) pour l'encollage de composants de sacs (2),
qui comprend une barre de buses (4) qui comprend au moins une buse pour l'extrusion de colle sur les composants du sac (2),
et qui comprend un support (5) qui comprime les composants du sac (2) contre la barre de buses (4) avec une force,
- le support (5) comprenant une surface active (6),
- cette surface active (6) permettant d'appliquer une force sur au moins le côté arrière de la surface à encoller d'un composant du sac,
- la surface active (6) étant segmentée,
et la surface active (6) comprenant des bandes (14) et/ou étant définie par des bandes (14),
**caractérisé en ce que**
deux branches (15), écartées l'une de l'autre, étant prévues, chaque bande étant articulée au niveau des deux branches ou les bandes (14) pouvant être guidées par des rouleaux de guidage (16) et étant mobiles dans la direction de déplacement (z) des composants du sac (2).

10. Procédé de fabrication de sacs,
- de préférence de sacs à valves à fonds croisés (18),
- dans lequel les composants (2) des sacs sont encollés,
- et dans lequel les sacs sont guidés le long de la barre de buses (4) pour l'encollage,
- qui (4) comprend au moins une buse pour l'extrusion de colle sur les composants du sac, qui permet d'appliquer de la colle sur les composants du sac (2),
- les composants du sac (2) étant comprimés, avec un support (5), en appliquant une force, contre la barre de buses (4),
- la force de différentes surfaces partielles d'une surface active du support étant transmise à l'arrière de la surface à encoller d'un composant de sac, la surface active (6) comprenant des bandes (14) et/ou étant définie par des bandes (14),
**caractérisé en ce que**
deux branches (15) écartées l'une de l'autre, sont prévues, chaque bande étant articulée au niveau des deux branches ou les bandes (14) pouvant être guidées par des rouleaux de guidage (16) et étant mobiles dans la direction de déplacement (z) des composants du sac (2).
